# EUROPEAN PATENT APPLICATION

(11) **EP 1 855 024 A1**
(43) Date of publication of application: **14.11.2007**
(21) Application number: 07251916.8
(22) Date of filing: 09.05.2007
(51) Int. Cl.: F16D 55/226, F16D 55/00

(54) **Wheel brake actuator**

(30) Priority: 10.05.2006 GB 0609258
(71) Applicant: Meritor Heavy Vehicle Braking Systems (UK) Limited, Cwmbran, Gwent NP44 3XU (GB)
(72) Inventor: Thompson, Richard Edgar, Monmouth Monmouthshire NP25 3SN (GB); Robertson, John, Little Sutton Cheshire CH66 4YS (GB); Juanpere, Albert, Barcelona 08032 (ES); Bellingham, Richard Martin, Llay Wrexham LL12 0PN (GB); Gaywood, Michael James, Crumlin Newport NP11 3AT (GB); Shih, Shan, Troy Michigan 48084 (US); Taylor, Martin Pors, Cwmbran Torfaen NP44 3ND (GB); Jackson, Jonathan Leslie Christopher, Ross-on-Wye Herefordshire HR9 6EA (GB); Aprameya, Sridhar, Birmingham West Midlands, B29 7JD (GB)
(74) Representative: Jones, John Bryn

(57) **Abstract**

An arcuate support (31) for a disk brake caliper (25) is keyed to a tubular axle casing (20), for example by way of a woodruff key (34), to transmit braking torque. The support may slide axially of the axle casing to permit the caliper to accommodate brake pad wear, and this construction eliminates the need for a moving component of the brake caliper itself. In the latter case braking torque may be transmitted via the keyed connection, or via a separate torque arm (41).

## Description

This invention relates to wheel brakes of vehicles, and particularly to an actuator for a disc brake.

Conventionally a disc brake comprises a rotor which forms part of the wheel hub, and a caliper which straddles the rotor and is grounded on the vehicle axle. Brake pads of the caliper can be urged on demand against the opposite annular faces of the rotor to slow the wheel, and brake reaction torque is transmitted to the axle, and via suspension arrangements to the vehicle body. In cars the caliper is usually hydraulically actuated, whereas in commercial vehicles the caliper is operated by a relatively large air actuator.

Calipers which straddle the disc conventionally require mountings on the vehicle axle housing; typically these are provided by means of fixed lugs to which the caliper is attached by screws. The lugs may for example be integrally formed as part of a cast stub axle housing, or provided by any suitable means at the end of a rigid axle. Once designed and manufactured, the relative position of the caliper is fixed with respect to wheel and suspension components. However space within the wheel arch is tightly constrained, and in certain circumstances it may be desirable to locate the caliper at a different angular orientation, for example to permit fitting of different components in the wheel arch space. These methods of caliper mounting do not permit relocation without design and manufacture of a different axle housing, with the disadvantage of additional cost and plurality of components.

It has also been proposed to use an adaptor plate to vary the circumferential position of the caliper, by for example providing a ring of bolt holes around the axle. However this adds to cost and weight, and is generally undesirable.

What is required is an alternative means of caliper mounting which permits variability of angular position with minimum adaptation of standard components.

According to a first aspect of the invention there is provided an arcuate support of a disc brake caliper of a vehicle, said support being adapted to receive an axle casing, and having an abutment for non-rotational engagement with respect to said axle casing.

The axle casing may comprise the tubular half shaft housing of a rigid axle, or the stub axle housing of a vehicle with independent suspension. By non-rotational we mean restrained against any relative arcuate movement, such as by woodruff key or spline.

Such an arrangement avoids the usual cast or welded mounting flange on the axle casing, and is suitable for location of the caliper at different arcuate positions. In one embodiment a discontinuity such as a key, is provided between the support and the axle casing. Non-rotational engagement ensures that braking torque generated at the caliper is grounded via the axle casing. Several key or spline positions may be provided, or alternatively one of the support and casing can have a fixed key position, whereas the other can be machined to suit the intended arcuate location.

A conventional brake caliper typically consists of a fixed member anchored to the axle, and a relatively movable member slidable thereon via, for example, slide pins. In this form of construction the fixed member transmits braking torque to the axle, whereas the sliding member applies a clamping force to the brake pads.

In a preferred embodiment of the invention, the support may be adapted for sliding movement along the drive axis, for example via a keyway. This arrangement avoids the requirement for separate sliding members of the caliper assembly. Typically the caliper comprises a single member incorporating a bridge which straddles the brake rotor. The outboard pad is fixed relative to the bridge, whereas the inboard pad transmits brake torque to the bridge but is slidable in the direction of the drive axis under the action of an actuator mounted on the single member. Wear of the outboard pad is accommodated by sliding of the single member relative to the vehicle axle. Wear of the inboard pad is by adjustment of the actuator output shaft, typically via an automatic wear adjuster.

A particular advantage of the invention is that stress raisers of welded joints are avoided, and accordingly fatigue failures of the axle casing are less likely. Distortion of the casing under welding is also avoided. Furthermore a discontinuity which transfers braking torque from the support to the axle casing can be accurately machined, and thus designed to resist fatigue failure, in contrast to a welded join which is somewhat unpredictable. Yet another advantage over welded construction is that the materials of the support and axle casing can be optimised without regard to mutual weldability. Cast axle casings have integral flanges, but are not suitable for modification after manufacture.

In a preferred embodiment, the support comprises an annulus assembled axially over an axle end in advance of the brake rotor and hub. A single woodruff key may be provided to restrain the support against relative rotation. The keyway can be provided at any circumferential location for example on the neutral bending axis and of a length and thickness to suit the intended duty. It will be appreciated that an axle with a fixed keyway design can have different supports fitted thereon to give different angular caliper positions. Thus a single axle design may be adapted to a variety of vehicles having different wheel arch envelopes, and thus a variety of possible caliper locations. It will further be understood that the support and/or axle may have plural keyways to permit components to be assembled in one of a number of angular positions.

Preferably the support fits closely to the exterior of the axle casing, for example against a cylindrical external surface. In the case of an annular support, a close sliding fit is desirable.

The support may comprise a portion of an annulus having sufficient circumferential extent for opposite discontinuities to prevent rotation relative to the axle casing. Thus the support may for example be 'C' shaped. Fixed inward or outward discontinuities, in the form of fingers may be provided, and for direct location in corresponding recesses; separate keys and the like are thereby avoided. A spline connection may be provided to give a very large number of potential support locations.

In the alternative the abutment may comprise a torque reaction arm grounded directly or indirectly on the axle casing. The arm may for example be grounded indirectly on a suspension component, such as a trailing radius arm, or on the vehicle body/chassis. In this embodiment a keyway may permit sliding movement of a caliper to accommodate pad wear, but is relieved of substantially all braking torque.

In a preferred embodiment, the trailing arm may include end connections which permit arcuate movement so as to accommodate slight change of orientation during working of the vehicle suspension. Such connections, which may for example pivot parallel to the drive axis, are required only if such orientation changes are features of the selected grounding point.

A feature of many disc brake installations is the use of a single-sided caliper, in which the actuating element (piston or tappet) is at the inboard side and acts directly on the inboard brake pad. The outboard brake pad is applied by a bridge which straddles the rotor and receives the reaction force of the actuating element. The bridge (or bridge assembly) is slidably mounted on a fixed member of the vehicle axle or stub axle.

According to a second aspect of the invention a bridge member of a disc brake caliper includes an arcuate support adapted to receive an axle casing therein for sliding, non-rotational engagement.

Such sliding non-rotational engagement may for example be provided by a keyway or spline, and permits the bridge member to adopt an appropriate position with respect to the rotor having regard to brake pad wear.

Several forms of arcuate support are possible, as mentioned in connection with the first embodiment of the invention. In one embodiment, the bridge member includes an annular support adapted for close fitting assembly on a tubular end of an axle or stub axle, and restrained against rotation by a suitable keyway or spline. Thus a sliding connection can be provided at the axle rather than by a caliper mounting attached to the axle. In the case of a splined connection, a plurality of angular mounting positions are readily available.

Such a non-rotational connection may also be used to ground brake torque to the axle, or grounding may be via a separate means, such as a torque reaction arm.

Other features of the invention will be apparent from the following description of a preferred embodiment shown by way of example only in the accompanying drawings in which:
Fig. 1 is an isometric view of a conventional vehicle axle assembly.
Fig. 2 is a plan view of one end of the axle of Fig. 1.
Fig. 3 is an axial section through one end of an axle incorporating the present invention.
Fig. 4 is a part-sectional axial view of the embodiment of Fig.3, from the outboard side.
Figs. 5 & 6 schematically show alternative arrangements for transmitting braking torque to an axle.

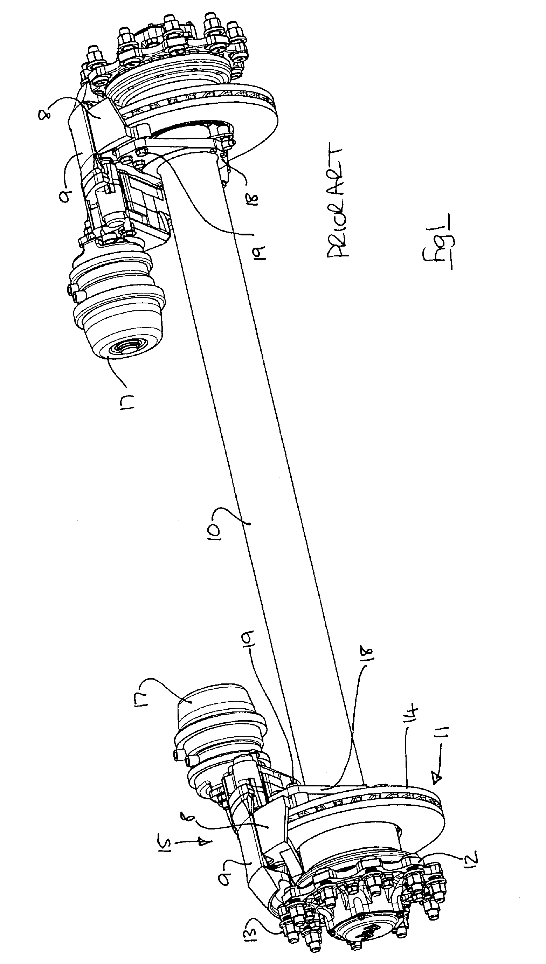

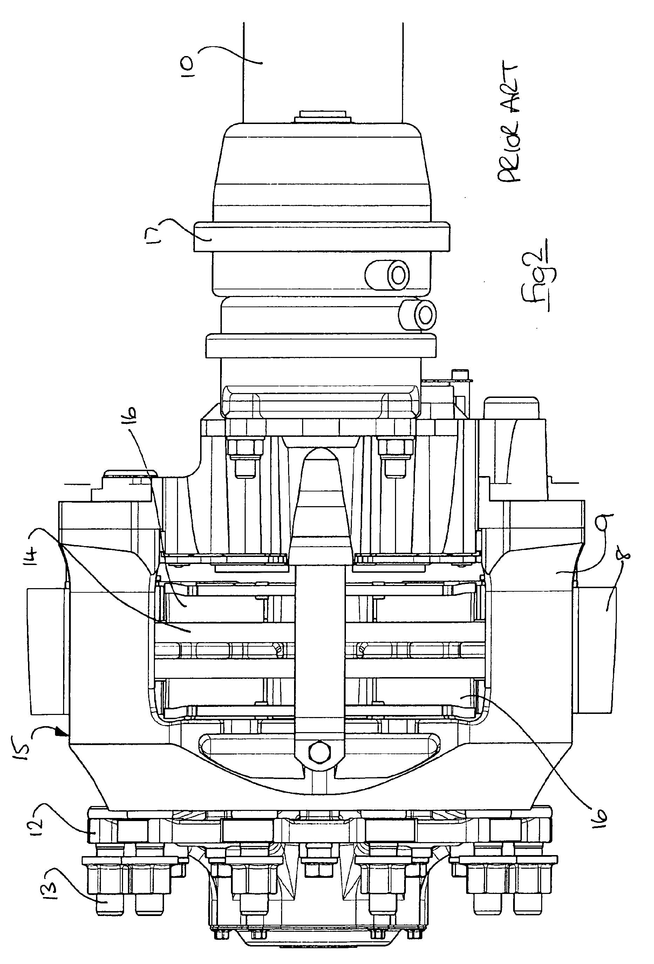

With reference to Figs.1 and 2 a conventional axle casing 10 has at one end a rotational hub 11 having the usual flange 12 with wheel studs 13. Inboard of the hub and rotatable therewith is a brake rotor 14. Surmounting the rotor is a brake caliper 15 having opposed brake pads 16 adapted to be actuated by an air actuator 17. The caliper 15 is grounded via an arcuate flange 18 welded to the axle casing 10, to which the caliper is attached by bolts 19. Such an arrangement schematically represents a typical prior art caliper mounting. As an alternative, the flange may form part of another component, for example a suspension mounting, or a forged axle end to which an axle tube is pinned or welded.

In the embodiment of Figs. 1 and 2, the caliper comprises a fixed member 8 attached to the flange 18, and a sliding bridge member 9 on which the actuator 17 is mounted. The brake pads 16 transmit braking torque directly to the fixed member 8, the actuator directly applying the inboard pad, whereas the outboard pad is applied by the bridge member 9. Thus the bridge member 9 is subjected to clamping forces only.

An axle to which a flange 18 has been welded, or which has a fixed bolting position may be unsuitable for fitting to a different kind of vehicle or a variant vehicle solely because the flange is in the wrong position with respect to the desired caliper mounting. Furthermore a welded join, which is most commonly used, tends to distort the relatively thin axle casing, and may lead to stress raisers and fatigue cracking, neither of which is acceptable. Other difficulties of welding are that the welded join may be at an undesirable circumferential location on the axle casing, such as a location subject to maximum bending stresses, and that the support and casing must be of compatible weldable materials.

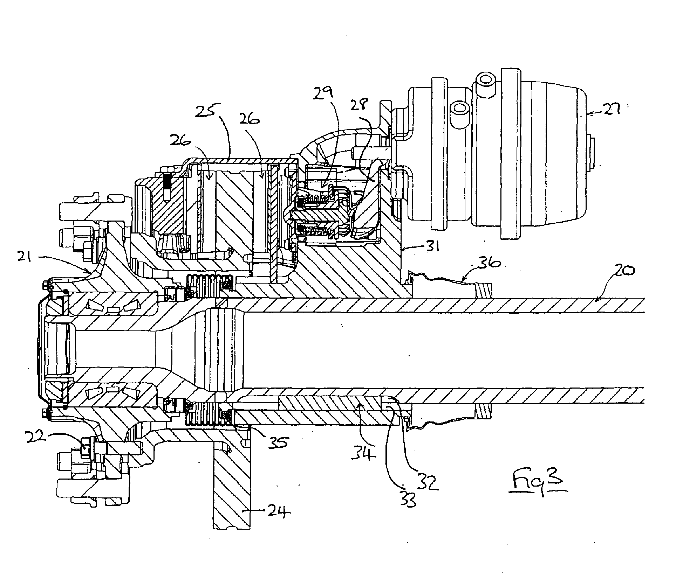

Fig. 3 illustrates an embodiment according to the invention.

A tubular axle casing 20 has a rotatable hub 21 to which is attached a brake rotor 24 by bolts 22. A brake caliper 25 straddles the rotor and has opposed brake pads 26. An air actuator 27 is operable to apply inboard brake pad directly to the rotor via a lever 28 and wear adjuster 29. The outboard pad is applied by sliding of the caliper to the right, as will be explained.

An annular support 31 is an integral part of the caliper 25, and surrounds the axle casing 20. The support may be cast in unit, or be bolted or attached in any other suitable manner. The caliper may be a single component or may be assembled from parts, e.g. with a bridge permanently attached by screws.

Keyways 32, 33 are formed respectively in the casing 20 and support 31 so that insertion of the woodruff key 34 retains the casing and support against relative rotation. Thus braking torque is grounded to the axle casing via the key 34, and welded connections are avoided. Dust boots 35,36 prevent ingress of dirt and moisture.

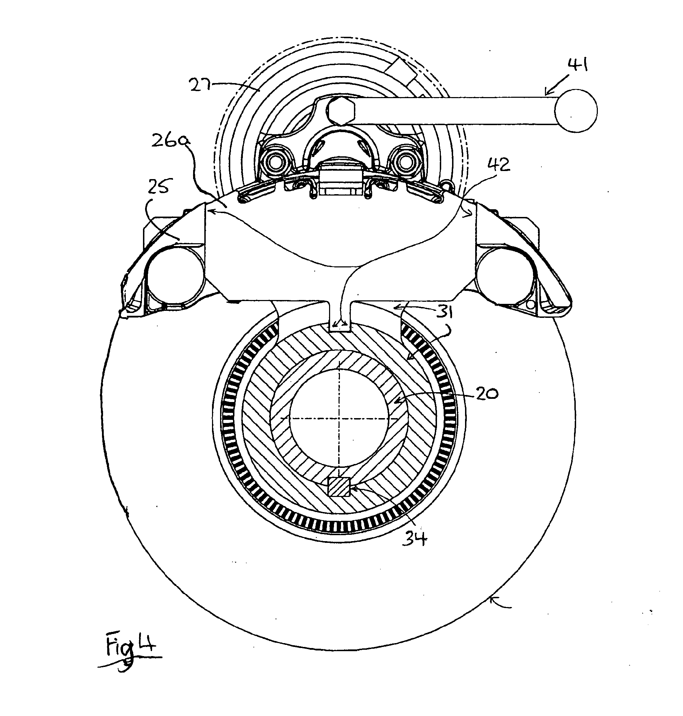

Fig. 4 corresponds to Fig. 3 and illustrates the annular support 31, axle casing 20 and key 34. Also shown in Fig. 4 is an alternative means of reacting braking torque via an arm 41 fixed at one end with respect to the support 31 and at the other end to a suitable grounding element of the vehicle axle, suspension, or body/chassis. Abutment locations 42 of an inboard pad 26a are also illustrated.

The arm 41 may have a dual function by providing an anti-dive link for the vehicle suspension.

The invention permits selection of appropriate materials for axle casing and support. For example the casing may be of thin steel tube whereas the support may be a cast or forged component. A caliper is generally insensitive to angular location, and accordingly the invention provides an improved chance that a large component, such as actuator 27, can be accommodated in a convenient and protected location.

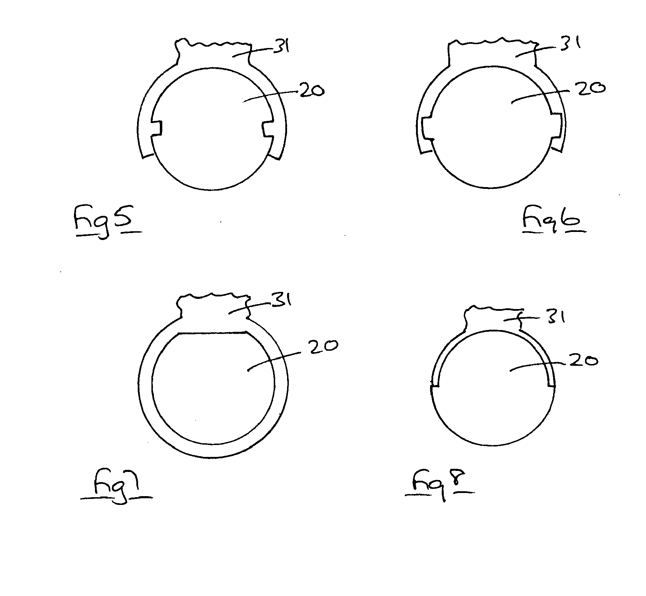

Figs. 5-8 show some examples of other arrangement for transferring during torque from support 31 to axle casings 20.

Fig. 4 illustrates an alternative aspect of the invention whereby brake torque is grounded by the reaction arm 41, the key 34 providing a sliding connection for the caliper in order to equalise pressure on the brake pads 26 and accommodate wear. In this embodiment, if the axle is cylindrical, the outer surface of the casing can provide a sliding surface without need for the key 34. Thus the usual sliding connection, e.g. by pins, is not provided in the caliper assembly itself, but on the axle. Thus the invention permits the keyway 34 (or equivalent sliding connection) to transfer braking torque to the axle (thus eliminating the need for separate torque reaction means, such as the arm 41) or simply act as a sliding support for the brake caliper.

## Claims

1. An arcuate support of a disc brake caliper of a vehicle, said support being adapted to receive an axle casing and having an abutment for non-rotational engagement therewith.

2. A support according to claim 1 and having an annulus to receive said casing.

3. A support according to claim 2 wherein said annulus is centred on the drive axis of said casing.

4. A support according to claim 2 or claim 3 wherein said abutment comprises a radial projection of said casing.

5. A support according to claim 2 or claim 3 wherein said abutment comprises a radial recess of said casing.

6. A support according to claim 2 or claim 3 wherein said abutment comprises woodruff key engagement in recesses of said support and said casing.

7. A support according to any preceding claim in combination with an axle casing.

8. A support according to claim 7 wherein said support and casing are an axially sliding fit.

9. A support according to claim 7 or claim 8 wherein said abutment comprises an arm extending from said support and adapted to be fixed relative to said casing.

10. A support according to claim 9 wherein said arm extends perpendicular to the drive axis of said axle, and is adapted for articulation in the plane perpendicular to said drive axis.

11. An arcuate support of a disc brake caliper of a vehicle, said support being adapted to receive an axle casing in slidable non-rotational engagement therewith.

12. An arcuate support according to claim 12 and having an annulus to receive said casing, and a spline or keyway therebetween.
